# EUROPÄISCHE PATENTSCHRIFT

(11) **EP 1 199 218 B1**
(45) Veröffentlichungstag und Bekanntmachung des Hinweises auf die Patenterteilung: **29.12.2004**
(21) Anmeldenummer: 01124880.4
(22) Anmeldetag: 18.10.2001
(51) Int. Cl.: B60R 1/07

(54) **Elektronischer Spiegelschalter und Aussenspiegel mit einem solchen Spiegelschalter**
Control switch for rear view mirror and rear view mirror including such a switch
Interrupteur de commande pour rétroviseur et rétroviseur comprenant un tel interrupteur

(30) Priorität: 19.10.2000 DE 10051895
(43) Veröffentlichungstag der Anmeldung: 24.04.2002
(73) Patentinhaber: MEKRA Lang GmbH & Co. KG, 90765 Fürth (DE)
(72) Erfinder: Lang, Heinrich, 91465 Ergersheim (DE); Witzke, Michael, 91522 Ansbach (DE)
(74) Vertreter: Winter, Brandl, Fürniss, Hübner, Röss, Kaiser, Polte Partnerschaft

(56) Entgegenhaltungen:
- US-A- 4 503 504
- US-A- 4 504 117

## Beschreibung

Die Erfindung betrifft einen elektronischen Spiegelschalter zum Betätigen von elektromotorisch verstellbaren Außenspiegeln für Kraftfahrzeuge, insbesondere für Nutzfahrzeuge, sowie einen Außenspiegel mit einem solchen Spiegelschalter

In Kraftfahrzeugen, sowohl in Nutzfahrzeugen als auch in Personenkraftwagen, sind immer mehr elektrisch betätigbare Funktionseinheiten, wie Zentralverriegelung, elektrische Fensterheber, verstellbare Außenspiegel, Schiebedach und dergleichen vorzufinden. Aus der DE 41 28 306 A1 ist eine Bedienungseinrichtung für in Fahrzeuge installierte Peripherie-Einrichtungen und Stellantriebe, insbesondere zur Betätigung und Verstellung von Außenrückblickspiegeln, bekannt. Für die einzelnen Funktionen und Stellantriebe in den Spiegeln sind in der Bedienungseinrichtung Schalter oder Sensortasten vorgesehen. Bei Betätigung der jeweiligen Sensortasten werden in einem Sendeteil entsprechende digitale Steuersignale erzeugt, die über eine Busleitung zu dem jeweiligen Spiegel geführt werden. Dort werden die Steuersignale wieder in entsprechende Analogsignale umgesetzt, mittels denen dann die jeweilige Funktion oder der jeweilige Stellantrieb im jeweiligen Spiegel aktiviert wird. Auf diese Weise lassen sich in und auf einer kleinen und kompakten Bedienungseinrichtung eine Vielzahl von Schaltern unterbringen, die dennoch leicht zu bedienen sind, da die einzelnen Schalter keine Mechanikteile aufweisen. Nachteilig ist jedoch, daß derartige Bedienungseinrichtungen nur verwendet werden können, wenn das jeweilige Fahrzeug mit dem zugehörigen Steuerbussystem ausgerüstet ist.

Die US-A-4504117 schlägt vor, Außenspiegel mittels Lastschaltern einzustellen. Erhennt ein Computer anhand Soll- ist- Vergleich von Potentiometer werten, welche Spiegelstellungen entsprechen, eine ungerwollte Verstellung des Spiegels betätigter den entsprechenden Lastschalter bis der Spiegel wieder in seiner Sollposition ist.

Es ist daher Aufgabe der vorliegenden Erfindung einen elektronischen Spiegelschalter anzugeben, der in Fahrzeugen mit herkömmlicher Verkabelung eingesetzt werden kann. Weiter ist es Aufgabe der vorliegenden Erfindung einen Außenspiegel für Kraftfahrzeuge mit einem solchen Spiegelschalter anzugeben.

Die Lösung dieser Aufgabe erfolgt durch die Merkmale des Anspruchs 1 bzw. 10.

Dadurch, daß eine Mehrzahl von Schwachstrom-Schaltern, z.B. in Form von Sensortasten oder Foliendrucktasten, über eine Laststeuereinheit mit einer Mehrzahl von sogenannten Lastschaltern verbunden sind, können auf vergleichsweise engem Raum eine Vielzahl von Schaltern und Bedienelementen angeordnet werden. Durch eine Kopplungseinrichtung weden die einzelnen Lastschalter mit einem herkömmlichen Kabelbaum verbunden. Hierdurch ist es möglich, den erfindungsgemäßen elektronischen Spiegelschalter in Fahrzeuge mit herkömmlicher Verkabelung ohne zusätzlichen Aufwand einzubauen.

Gemäß einer bevorzugten Ausführungsform der Erfindung ist im Bedienteil eine optische und/oder akustische Anzeige vorgesehen, die die Aktivierung bzw. Betätigung eines bestimmten Schwachstromschalters anzeigt. Dies ist insbesondere bei Sensorstasten oder Foliendrucktasten als Schwachstromschaltern vorteilhaft, da sonst die EIN- oder AUS-Stellung des jeweiligen Schalters nicht erkennbar ist.

Gemäß einer weiteren vorteilhaften Ausgestaltung der Erfindung sind alle Komponenten des elektronischen Spiegelschalters in einem gemeinsamen Gehäuse angeordnet, wobei das Bedienteil bzw. die Bedienelemente von der Vorderseite her zugänglich sind, und die elektronische Kopplungseinrichtung von einer anderen, vorzugsweise von der Rückseite her zugänglich ist. Hierdurch wird der Einbau des erfindungsgemäßen elektronischen Spiegelschalters in auf übliche Weise verkabelte Fahrzeuge vereinfacht.

Gemäß einer bevorzugten Ausführungsform der Erfindung handelt es sich bei der elektrischen Kopplungseinrichtung um eine Standard-Steckverbindung, mittels der herkömmliche Analgoschalter an Kabelbäume angeschlossen werden.

Die übrigen Unteransprüche beziehen sich auf weitere vorteilhafte Ausgestaltungen der Erfindung.

Weitere Einzelheiten, Merkmale und Vorteile der Erfindung ergeben sich aus der nachfolgenden Beschreibung einer beispielhaften Ausführungsform.

Es zeigt:
Fig. 1 ein Blockschaltbild einer beispielhaften Ausführungsform, und
Fig. 2 die Frontansicht des Bedienteils der beispielhaften Ausführungsform nach Fig. 1.

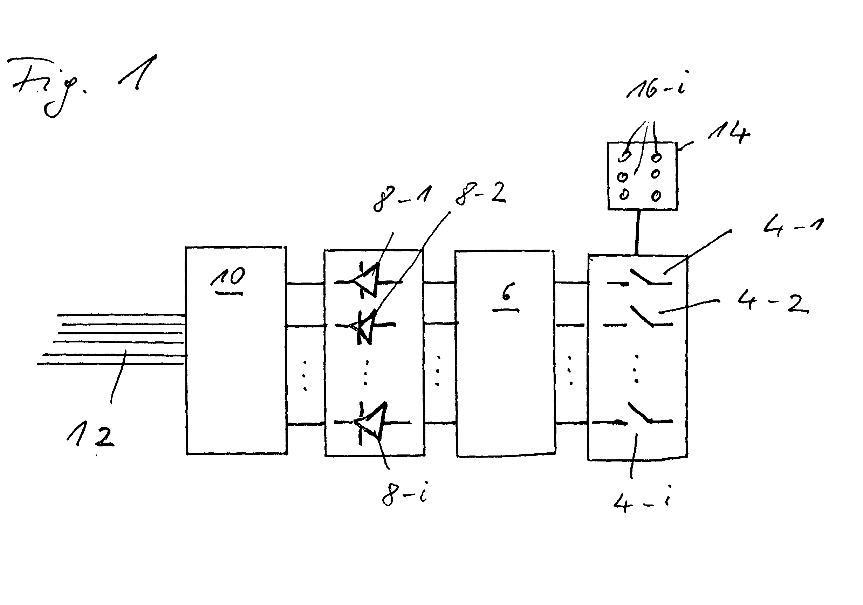

Fig. 1 zeigt eine beispielhafte Ausführungsform des elektronischen Spiegelschalters gemäß der vorliegenden Erfindung mit einem Bedienteil 2 mittels dem eine Mehrzahl von Schwachstromschaltern in Form von Foliendrucktasten 4-1, 4-2 ... 4-i betätigbar sind. Über eine Laststeuereinheit 6 werden den Schwachstrom-Schaltern 4-i zugeordnete Lastschalter 8-1, 8-2 ... 8-i angesteuert. Die Ausgänge der Lastschalter 8-i werden mittels einer elektrischen Kopplungseinrichtung in Form einer Standard-Steckverbindung 10 über elektrische Leitungen in Form eines Kabelbaums 12 mit den jeweiligen Verbrauchern im Spiegel verbunden. Durch eine Anzeigeeinrichtung 14, die eine Mehrzahl von LEDs 16-1, 16-2, 16-i aufweist, wird die Betätigung einzelner Schalter und deren Betriebszustand optisch angezeigt. Zusätzlich kann die Betätigung einzelner Schalter 4-i noch durch akustische Signale angezeigt werden. Die Stromversorgung des elektronischen Spiegelschalters erfolgt über die Stromversorgung des jeweiligen Kraftfahrzeugs.

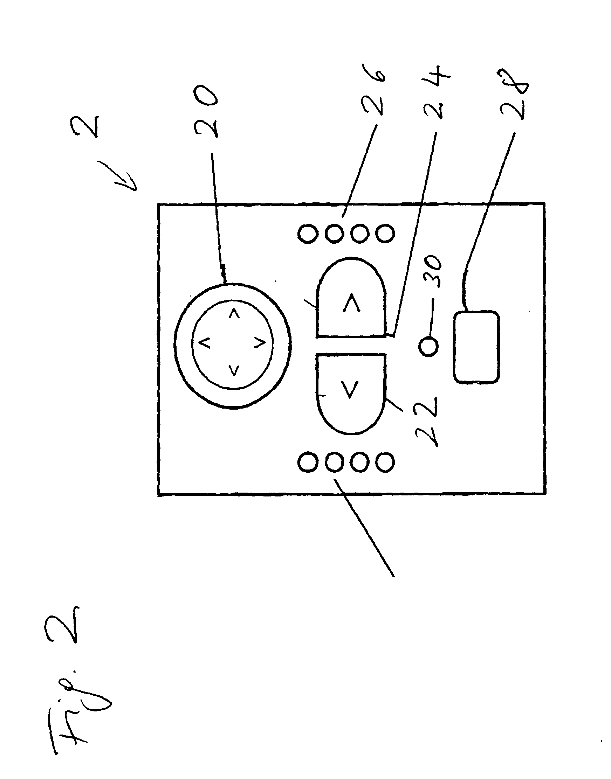

Fig. 2 zeigt eine beispielhafte Ausgestaltung eines Bedienteils 2 in Aufsicht, bei dem mehrere Schwachstromschalter 4-i für verschiedene Funktionen vorgesehen sind. Ein Schwachstrom-Schalter in Form eines Wippschalters 20 dient zum Verstellen und Verkippen des jeweiligen Außenspiegels in einer Ebene. Weiter sind zwei Spiegelauswahlschalter, ein linker Spiegelauswahlschalter 22 - Fahrerseite- und ein rechter Spiegelauswahlschalter 24 - Beifahrserseite - vorgesehen, durch die entweder der linke oder der rechte Außenspiegel zur Bedienung ausgewählt wird. Links bzw. rechts neben den beiden Spiegelauswahlschaltern 22 und 24 sind jeweils vier LED-Elemente 26 vorgesehen, durch die das Verkippen des jeweiligen Spiegels angezeigt wird. Unter den beiden Spiegelauswahlschaltern 22 und 24 ist ein Spiegelheizungsschalter 26 angeordnet, durch die die Spiegelheizung in den beiden Außenspiegeln aktiviert werden kann. Über den Spiegelheizungsschalter 28 ist ein Heizungs-LED-Element 30 angeordnet, daß leuchtet, wenn die Spiegelheizung mittels dem Spiegelheizungsschalter 28 aktiviert worden ist.

### Bezugszeichenliste:

- 2: Bedienteil
- 4-i: Schwachstrom-Schalter
- 6: Laststeuereinheit
- 8-i: Lastschalter
- 10: elektrische Kopplungseinrichtung, Standard-Steckverbindung
- 12: Anzeigeeinrichtung
- 14-i: LEDs
16
- 20: Wippschalter
- 22: linker Spiegelauswahlschalter
- 24: rechter Spiegelauswahlschalter
- 26: LED-Elemente
- 28: Spiegelheizungsschalter
- 30: Spiegelheizungs-LED-Element

## Patentansprüche

1. Elektronischer Spiegelschalter zum Betätigen von elektromotorisch verstellbaren Außenspiegeln für Kraftfahrzeuge, insbesondere für Nutzfahrzeuge, mit
einem Bedienteil (2) mit einer Mehrzahl von Schwachstrom-Schaltern (4-i; 20, 22, 24, 28),
einer Laststeuereinheit (6), die mit den Schwachstrom-Schaltern (4-i; 20, 22, 24, 28) verbunden ist, und
einer Mehrzahl von Lastschaltern (8-i),die mit der Laststeuereinheit (6) verbunden sind und die einzelnen Schwachstrom-Schaltern (4-i; 20, 22, 24, 28) zugeordnet sind, wobei die Lastschalter (8-i) über die zugeordneten Schachstrom-Schalter (4-i; 20, 22, 24, 28) und die zwischengeschaltete Laststeuereinheit (6) betätigbar sind, **gekennzeichnet durch**
eine elektrische Kopplungseinrichtung (10) zum Verbinden der Lastschalter (8-i) mit einem herkömmlichen Kabelbaum (12) von den Außenspiegeln.

2. Elektronischer Spiegelschalter nach Anspruch 1, dg, dass einer der Schwachstrom- und Lastschalter (28) zur Aktivierung einer Spiegelheizung dient.

3. Elektronischer Spiegelschalter nach Anspruch 1 oder 2, **gekennzeichnet durch** eine Anzeigeeinrichtung (14) zur Erzeugung eines optischen und/oder akustischen Signales zur Anzeige der Betätigung eines Schwachstrom- (4-i; 20, 22, 24, 28) und eines zugeordneten Lastschalters (8-i).

4. Elektronischer Spiegelschalter nach einem der vorhergehenden Ansprüche, **dadurch gekennzeichnet, dass** das Bedienteil (2) Sensortasten aufweist.

5. Elektronischer Spiegelschalter nach einem der vorhergehenden Ansprüche, **dadurch gekennzeichnet, dass** das Bedienteil Drucktasten, insbesondere Foliendrucktasten (20, 22, 24, 28) aufweist.

6. Elektronischer Spiegelschalter nach einem der vorhergehenden Ansprüche, **dadurch gekennzeichnet, dass** das Bedienteil (2), die Laststeuereinheit (6) und die Mehrzahl der Lastschalter (8-i) in einem gemeinsamen Gehäuse angeordnet sind, dass das Bedienteil (2) auf einer Vorderseite des gemeinsamen Gehäuses angeordnet ist und dass die elektrische Kopplungseinrichtung (10) an einer der Außenseiten des gemeinsamen Gehäuses vorgesehen ist.

7. Elektronischer Spiegelschalter nach Anspruch 6, **dadurch gekennzeichnet, dass** das gemeinsames Gehäuse zum Einbau in ein Armaturenbrett oder in eine Tür eines Kraftfahrzeugs ausgelegt ist.

8. Elektronischer Spiegelschalter nach einem der vorhergehenden Ansprüche, **dadurch gekennzeichnet, dass** die elektrische Kopplungseinrichtung (10) zur Verbindung der Lastschalter (8-i) mit dem Kabelbaum (12) Standard-Steckverbindungen sind.

9. Außenspiegel für Kraftfahrzeuge, insbesondere Nutzfahrzeuge, mit einer elektromotorischen Verstelleinheit zum Verstellen von mindestens einer Spiegelscheibe, wobei die elektromotorische Verstelleinheit mittels einem Spiegelschalter betätigbar ist, **dadurch gekennzeichnet, dass** der Spiegelschalter ein elektronischer Spiegelschalter nach einem der vorhergehenden Ansprüche ist.

## Claims

1. An electronic mirror switch for actuating external mirrors for automotive vehicles, in particular for commercial vehicles, which mirrors are capable of being adjusted by electric motors, comprising
an operating unit (2) having a plurality of low-current switches (4-i; 20, 22, 24, 28),
a load control unit (6) connected to said low-current switches (4-i; 20, 22, 24, 28), and
a plurality of load switches (8-i) connected to said load control unit (6) and associated to individual low-current switches (4-i; 20, 22, 24, 28), wherein said load switches (8-i) are capable of being operated via said associated low-current switches (4-i; 20, 22, 24, 28) and said interposed load control unit (6),
**characterized by**
electrical coupling means (10) for connecting said load switches (8-i) to a conventional cable tree (12) from the external mirrors.

2. The electronic mirror switch in accordance with claim 1, **characterized in that** one of said low current and load switches (28) serves for activating a mirror heating.

3. The electronic mirror switch in accordance with claim 1 or 2, **characterized by** a display device (14) for generating an optical and/or acoustic signal for indicating activation of a low-current switch (4-i; 20, 22, 24, 28) and of an associated load switch (8-i).

4. The electronic mirror switch in accordance with any one of the preceding claims, **characterized in that** said operating unit (2) includes touch keys.

5. The electronic mirror switch in accordance with any one of the preceding claims, **characterized in that** said operating unit includes push buttons, in particular membrane push buttons (20, 22, 24, 28).

6. The electronic mirror switch in accordance with any one of the preceding claims, **characterized in that** said operating unit (2), said load control unit (6), and said plurality of load switches (8-i) are accommodated in a common housing, that said operating unit (2) is arranged on a front face of said common housing, and that said electrical coupling means (10) are provided on one of the external faces of said common housing.

7. The electronic mirror switch in accordance with claim 6, **characterized in that** said common housing is adapted to be mounted in a dashboard or in a door of an automotive vehicle.

8. The electronic mirror switch in accordance with any one of the preceding claims, **characterized in that** said electrical coupling means (10) for connecting said load switches (8-i) to said cable tree (12) are standard plug connectors.

9. An external mirror for automotive vehicles, in particular for commercial vehicles, including an electric-motor adjusting unit for adjusting at least one mirror pane, said electric-motor adjusting unit being capable of being operated by means of a mirror switch, **characterized in that** said mirror switch is an electronic mirror switch in accordance with any one of the preceding claims.

## Revendications

1. Interrupteur électronique pour rétroviseur extérieurs, réglable par moteur électrique, pour des véhicules automobiles en particulier pour des véhicules utilitaires, comprenant :
une partie de manoeuvre (2), comprenant une pluralité d'interrupteurs à courant faible (4-i; 20, 22, 24, 28),
une unité de commande de charge (6), reliée aux interrupteurs de courant faible (4-i; 20, 22, 24, 28), et
une pluralité d'interrupteurs de charge (8-i), reliés à l'unité de commande de charge (6) et associés à des interrupteurs pour courant faible (4-i; 20, 22, 24, 28) individuels, les interrupteurs de charge (8-i) étant susceptibles d'être actionnés par l'intermédiaire des interrupteurs pour courant faible (4-i; 20, 22, 24, 28) associés et de l'unité de commande de charge (6) branchée en situation intermédiaire,
**caractérisé par** un dispositif de couplage électrique (10), pour assurer la liaison des interrupteurs de charge (8-i) à un faisceau de câbles (12) classique depuis les rétroviseurs.

2. Interrupteur électronique pour rétroviseur selon la revendication 1, **caractérisé en ce que** l'un des interrupteurs pour courant faible et de charge (28) sert à l'activation d'un chauffage de rétroviseur.

3. Interrupteur électronique pour rétroviseur selon la revendication 1 ou 2, **caractérisé par** un dispositif d'affichage (14) pour produire un signal optique et/ou acoustique pour l'affichage de l'actionnement d'un interrupteur pour courant faible (4-i; 20, 22, 24, 28) et d'un interrupteur de charge (8-i) associé.

4. Interrupteur électronique pour rétroviseur selon l'une des revendications précédentes, **caractérisé en ce que** la partie de manoeuvre (2) présente des touches de capteurs.

5. Interrupteur électronique pour rétroviseur selon l'une des revendications précédentes, **caractérisé en ce que** la partie de manoeuvre présente des touches de pression, en particulier des touches de pression à feuille (20, 22, 24, 28).

6. Interrupteur électronique pour rétroviseur selon l'une des revendications précédentes, **caractérisé en ce que** la partie de manoeuvre (2), l'unité de commande de charge (6) et la pluralité d'interrupteurs de charge (8-i) sont disposées dans un boîtier commun, **en ce que** la partie de manoeuvre (2) est disposée sur une face avant du boîtier commun, et **en ce que** le dispositif de couplage électrique (10) est prévu sur l'une des faces extérieures du boîtier commun.

7. Interrupteur électronique pour rétroviseur selon la revendication 8, **caractérisé en ce que** le boîtier commun est conçu pour intégration dans un tableau de bord, ou dans une portière d'un véhicule automobile.

8. Interrupteur électronique pour rétroviseur selon l'une des revendications précédentes, **caractérisé en ce que** le dispositif de couplage électrique (10) est formé de liaisons à enfichage standard, pour relier les interrupteurs de charge (8-i) au harnais de câble (12).

9. Rétroviseur extérieur pour véhicules automobiles, en particulier véhicules utilitaires, avec une unité de manoeuvre à moteur électrique pour régler au moins un miroir réfléchissant, l'unité de manoeuvre à moteur électrique étant susceptible d'être actionnée à l'aide d'un interrupteur pour rétroviseur, **caractérisé en ce que** l'interrupteur pour rétroviseur est un interrupteur pour rétroviseur électronique selon l'une des revendications précédentes.
